(19) Europäisches Patentamt
European Patent Office
Office européen des brevets

(11) EP 0 735 061 B1

(12) EUROPÄISCHE PATENTSCHRIFT

(45) Veröffentlichungstag und Bekanntmachung des Hinweises auf die Patenterteilung:
**21.01.1998 Patentblatt 1998/04**

(51) Int Cl.[6]: **C08F 212/08**, C08F 220/12, C09J 125/14, C09J 133/06, C04B 26/04, C04B 26/06, C08K 5/17

(21) Anmeldenummer: **96104380.9**

(22) Anmeldetag: **20.03.1996**

(54) **Verwendung kationisch stabilisierter wässriger Polymerisatdispersionen als Bindemittel für Formkörper auf der Basis von einer negativen Oberflächenladung aufweisenden feinteiligen Materialien**

Use of aqueous cationically stabilized polymer dispersions as binder for moulded articles based on small particles having a negative surface charge

Utilisation de dispersions aqueuses de polymère, stabilisées cationiquement en tant que liants pour articles moulés, à base de fine particules ayant une charge de surface négative

(84) Benannte Vertragsstaaten:
**BE DE FR GB IT LU NL SE**

(30) Priorität: **27.03.1995 DE 19511130**

(43) Veröffentlichungstag der Anmeldung:
**02.10.1996 Patentblatt 1996/40**

(73) Patentinhaber: **BASF Aktiengesellschaft**
**67063 Ludwigshafen (DE)**

(72) Erfinder:
- **Reck, Bernd, Dr.**
  **67269 Grünstadt (DE)**
- **Beckerle, Wilhelm Friedrich**
  **67240 Bobenheim-Roxheim (DE)**
- **Portugall, Michael, Dr.**
  **67157 Wachenheim (DE)**
- **Wistuba, Eckehart, Dr.**
  **67098 Bad Dürkheim (DE)**
- **Meister, Martin, Dr.**
  **67434 Neustadt (DE)**

(56) Entgegenhaltungen:
**EP-A- 0 266 850** **EP-A- 0 475 166**
**EP-A- 0 486 374** **EP-A- 0 497 100**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 735 061 B1

## Beschreibung

Die vorliegende Erfindung betrifft die Verwendung von kationisch stabilisierten wäßrigen Polymerisatdispersionen, enthaltend

- ein in disperser Verteilung befindliches Copolymerisat A, das in polymerisierter Form aus

| | |
|---|---|
| 30 bis 80 | Gew.-Teilen Styrol (Monomer a), |
| 20 bis 70 | Gew.-Teilen wenigstens eines Monomeren aus der Gruppe umfassend Ester der Acryl- und Methacrylsäure mit $C_1$- bis $C_8$-Alkanolen (Monomere b) und |
| 0 bis 10 | Gew.-Teilen sonstiger radikalisch copolymerisierbarer Monomerer (Monomere c) |

  mit der Maßgabe aufgebaut ist, daß die statische Glasübergangstemperatur Tg (DSC, midpoint temperature nach ASTM D 3418-82, vgl. Ullmann's Encyclopedia of Industrial Chemistry, VCH Weinheim (1992), S. 169) des Copolymerisats A 40 bis 110°C beträgt, sowie

- als Dispergiermittel B ein Gemisch bestehend aus wenigstens einem wenigstens acht C-Atome aufweisenden primären, sekundären und/oder tertiären organischen Monoamin und dessen Säureadditionssalz,

als Bindemittel für Formkörper auf der Basis von eine negative Oberflächenladung aufweisenden feinteiligen Materialien.

Ferner betrifft vorliegende Erfindung zur erfindungsgemäßen Verwendung geeignete wäßrige Polymerisatdispersionen und deren Herstellung. Auch betrifft vorliegende Erfindung Verfahren zur Herstellung von Formkörpern auf der Basis von eine negative Oberflächenladung aufweisenden feinteiligen Materialien in Anwendung der erfindungsgemäßen Verwendung, sowie die dabei resultierenden Formkörper.

Die Verwendung wäßriger Polymerisatdispersionen als Bindemittel für Formkörper auf der Basis von eine negative Oberflächenladung aufweisenden feinteiligen Materialien ist z.B. aus der EP-A 266 850 bekannt. Angestrebt werden dabei insbesondere solche Formkörper, die sowohl bei erhöhter Temperatur als auch unter der Einwirkung von Feuchtigkeit eine erhöhte Formstabilität aufweisen. Von besonderem Interesse sind dabei flächige Formkörper (Platten), die in feucht-warmer Atmosphäre (Tropenklima) eine erhöhte Formstabilität aufweisen und z.B. als Leichtbauplatten, insbesondere Deckenplatten, geeignet sind. Selbstverständlich soll auch die innere Festigkeit solcher Formkörper befriedigen. Als eine negative Oberflächenladung aufweisende feinteilige Materialien nennt die EP-A 266850 beispielsweise Mineralwolle oder Cellulose-Fasern. Als Bindemittel empfiehlt sie wäßrige Polymerisatdispersionen von in disperser Verteilung befindlichen Polymerisaten, deren statische Glasübergangstemperatur wenigstens 35°C beträgt. Die Monomerenzusammensetzung ist dabei über weite Bereiche variabel und erstreckt sich von im wesentlichen ausschließlich aus Estern der Acryl- oder Methacrylsäure aufgebauten Polymerisaten bis zu solchen Polymerisaten, die neben den vorgenannten Monomeren noch Styrol einpolymerisiert enthalten. Nachteilig an den seitens der EP-A 266850 empfohlenen Bindemitteln ist jedoch, daß sie ausschließlich anionisch und/oder nichtionisch stabilisiert sind. D.h. die verwendeten Emulgatoren sind ausschließlich anionischer und/oder nichtionischer Natur.

Dies ist insofern von Nachteil, als anionisch und/oder nichtionisch stabilisierte Polymerisatteilchen keine besondere Affinität zur Oberfläche der zu bindenden feinteiligen Ausgangsmaterialien aufweisen. Zum Abscheiden des dispergierten Polymerisats auf der Oberfläche der feinteiligen Ausgangsmaterialien bedarf es daher des Zusatzes eines polymeren kationischen Flokkungsmittels. Doch selbst bei Mitverwendung eines solchen Flokkungsmittels erfolgt die Abscheidung des Polymerisats nicht besonders gleichmäßig auf der Oberfläche der feinteiligen Ausgangsmaterialien, was die Qualität der resultierenden Formkörper mindert.

Die US-A 4 187 142 betrifft ebenfalls Formkörper auf der Basis von eine negative Oberflächenladung aufweisenden feinteiligen Materialien und wäßrigen Polymerisatdispersionen als Bindemittel. Charakteristisch an den seitens der US-A 4187142 als Bindemittel empfohlenen wäßrigen Polymerisatdispersion ist, daß die disperse Verteilung der Polymerisatteilchen mittels, vom pH-Wert des wäßrigen Dispergiermediums im wesentlichen unabhängigen, kationischen Ladungen erfolgt. Nachteilig an den seitens der US-A 4 187 142 empfohlenen Bindemitteln ist jedoch, daß es zum Abscheiden des in ihnen enthaltenen dispergierten Polymerisats auf der Oberfläche der feinteiligen Ausgangsmaterialien des Zusatzes eines polymeren anionischen Flockungsmittels bedarf. Ferner ist von Nachteil, daß ein solches auf der Oberfläche der feinteiligen Ausgangsmaterialien abgeschiedenes Polymerisat nach wie vor die im wesentlichen permanenten, die Wasserverträglichkeit gewährleistenden, kationischen Ladungen aufweist, bewirkt dies doch eine erhöhte Wasseraufnahme der Formkörper in Feuchtklima und damit einhergehend eine reduzierte Formstabilität.

Die EP-A 475 166 betrifft Formkörper auf der Basis von eine negative Oberflächenladung aufweisenden feinteiligen Materialien und wäßrigen Polymerisatdispersionen deren dispergiertes Polymerisat im wesentlichen ausschließlich

aus Estern der Acrylsäure aufgebaut ist und mit einem Gemisch bestehend aus wenigstens einem primären, sekundären und/oder tertiären organischen Monoamin und dessen Säureadditionssalz in disperser Verteilung gehalten wird.

Das Abscheiden der dispergierten Polymerisate erfolgt durch Erhöhung des pH-Wertes des wäßrigen Dispergiermediums. Dies bewirkt eine Desaktivierung der aminischen Emulgatoren, woraus eine reduzierte Wasseraufnahme im Feuchtklima und daraus eine erhöhte Formstabilität resultiert. Insbesondere ist die EP-A 475 166 auf die Herstellung von Leichtbauplatten gerichtet. Nachteilig an den Formkörpern der EP-A 475 166 ist jedoch, daß ihre Formstabilität in feucht warmem Klima nicht voll zu befriedigen vermag. Auch vermag ihre Steifigkeit nicht zu befriedigen.

Die Aufgabe der vorliegenden Erfindung bestand daher darin, für die Verwendung als Bindemittel für Formkörper auf der Basis von eine negative Oberflächenladung aufweisenden feinteiligen Materialien geeignete wäßrige Polymerisatdispersionen zur Verfügung zu stellen, die die Nachteile der im Stand der Technik als Bindemittel für solche Formkörper empfohlenen wäßrigen Polymerisatdispersionen nicht aufweisen. Demgemäß wurde die eingangs definierte Verwendung von wäßrigen Polymerisatdispersionen gefunden.

Vorzugsweise beträgt die statische Glasübergangstemperatur des Copolymerisats A 60 bis 110°C, besonders bevorzugt 80 bis 100°C. Nach Fox [T.G. Fox, Bull. Am. Phys. Soc. (Ser. II) 1, 123 (1956)] gilt für den Zusammenhang zwischen statischer Glasübergangstemperatur und Monomerenzusammensetzung von Copolymeren in guter Näherung

$$\frac{1}{Tg} = \frac{X^1}{Tg^1} + \frac{X^2}{Tg^2} + \dots\dots\dots \frac{X^n}{Tg^n},$$

wobei $X^1$, $X^2$, ... ..., $X^n$ die Massenbrüche der Monomeren 1,2 .... ...., n und $Tg^1$, $Tg^2$, ... .... $Tg^n$ die statischen Glasübergangstemperaturen der entsprechenden Homopolymeren in Grad Kelvin bedeuten. Die statischen Glasübergangstemperaturen der Homopolymerisate der Monomeren a), b) und c) sind bekannt und z.B. in J. Brandrup, E.H. Immergut, Polymer Handbook, 1st Ed., J. Wiley, New Jork, 1966 und 2nd Ed., J. Wiley, New York, 1975, aufgeführt. In der Regel enthält der resultierende Formkörper, bezogen auf sein Gesamtgewicht, 1 bis 25, bevorzugt 3 bis 15 und besonders bevorzugt 5 bis 10 Gew.-% an erfindungsgemäßem Copolymerisat A.

Aus der Gruppe umfassend Ester aus Acryl- oder Methacrylsäure mit $C_1$- bis $C_8$-Alkanolen eignen sich als Comonomere insbesondere Methylacrylat, Ethylacrylat, n-Butylacrylat, 2-Ethylhexylacrylat, Methylmethacrylat und tert.-Butylmethacrylat. Das zahlenmittlere Molekulargewicht des dispergierten Copolymerisats A liegt üblicherweise bei $5 \cdot 10^4$ bis $3 \cdot 10^6$, vorzugsweise bei $1 \cdot 10^5$ bis $1.10^6$. Der Feststoffgehalt der erfindungsgemäß zu verwendenden wäßrigen Polymerisatdispersionen liegt normalerweise bei 20 bis 60 Gew.-%, vorzugsweise bei 35 bis 55 Gew.-%. Der zahlenmittlere Durchmesser der dispergierten Polymerisatteilchen beträgt normalerweise 50 bis 1000, vorzugsweise 100 bis 500 nm. In der Regel enthält die erfindungsgemäß zu verwendende wäßrige Polymerisatdispersion als dispergiertes Polymerisat ausschließlich Copolymerisat A. Der pH-Wert des wäßrigen Dispergiermediums der erfindungsgemäß zu verwendenden wäßrigen Polymerisatdispersionen beträgt normalerweise $\leq 7$, vorzugsweise 7 bis 1, besonders bevorzugt 2 bis 5 und ganz besonders bevorzugt 2 bis 4. Mit Vorteil beträgt der Anteil des Monomeren a), bezogen auf die Masse des Copolymerisats A, wenigstens 40 Gew.-%. Häufig liegt dieser Anteil bei wenigstens 50 Gew.-%. Maximal beträgt dieser Anteil 80 Gew.-%.

Als mögliche radikalisch copolymerisierbare Monomere c) kommen in Betracht Olefine wie Ethylen, von Styrol verschiedene vinylaromatische Monomere wie $\alpha$-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat, Vinylpivalat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Maleinsäuredimethylester oder Maleinsäure-n-butylester, Nitrile $\alpha,\beta$-monoethylenisch ungesättigter Carbonsäuren wie Acrylnitril oder Methacrylnitril, $\alpha,\beta$-monoethylenisch ungesättigte Mono- und Dicarbonsäuren wie Acrylsäure, Methacrylsäure, Maleinsäure, Fumarsäure und Itaconsäure, ferner Vinylsulfonsäure und deren wasserlösliche Salze sowie N-Vinylpyrrolidon und andere. Vorzugsweise werden als Monomere c) keine ionischen Monomeren verwendet.

Neben den als erfindungswesentliche Dispergiermittel B erforderlichen Gemischen, bestehend aus wenigstens einem primären, sekundären und/oder tertiären wenigstens acht C-Atome aufweisenden organischen Monoamin und dessen Säureadditionssalz, können die erfindungsgemäß zu verwendenden wäßrigen Polymerisatdispersionen zusätzlich andere nichtionische und/oder kationische Dispergiermittel enthalten. Mit Vorteil bilden die Dispergiermittel B jedoch wenigstens 25 Gew.-%, vorzugsweise wenigstens 50 Gew.-%, besonders bevorzugt wenigstens 75 Gew.-% und ganz besonders bevorzugt 100 Gew.-% der Gesamtmenge an insgesamt enthaltenen Dispergiermitteln.

Günstige erfindungsgemäße Dispergiermittel B enthalten als aminische Komponente wenigstens eine Verbindung der allgemeinen Formel I

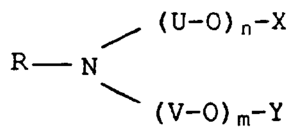

(I),

in der

R für $C_8$- bis $C_{18}$-Alkyl oder $C_8$- bis $C_{18}$-Alkenyl,
U,V für $C_2$- bis $C_4$-Alkylen,
X, Y für Wasserstoff, $C_1$- bis $C_{18}$-Alkyl oder $C_2$- bis $C_{18}$-Alkenyl und
n, m für ganze Zahlen von 0 bis 15 stehen.

Es handelt sich bei diesen Verbindungen um langkettige Amine mit 8 bis 18 C-Atomen im Kohlenwasserstoffrest, die am Stickstoffatom ein oder zwei weitere Reste tragen können. Als solche Reste kommen neben $C_1$- bis $C_{18}$-Alkyl- und $C_2$- bis $C_{18}$-Alkenylgruppen noch Polyalkylenoxidreste in Betracht, die aus bis zu 10 $C_2$- bis $C_4$-Alkylenoxideinheiten bestehen und terminal Wasserstoff, $C_1$- bis $C_{18}$-Alkyl- oder $C_2$- bis $C_{18}$-Alkenylgruppen tragen können. Beispiele hierfür sind Laurylamin, Dimethyloleylamin und das Umsetzungsprodukt von 1 Mol Stearylamin mit 10 Mol Ethylenoxid beziehungsweise von 1 Mol Oleylamin mit 12 Mol Ethylenoxid. Verbindungen der allgemeinen Formel I mit n und/oder $m \neq 0$, insbesondere $\geq 2$, sind bevorzugt.

Ausgehend von den erfindungswesentlichen primären, sekundären und/oder tertiären Aminen eignen sich zur Bildung ihrer Säureadditionssalze (zur Ammoniumsalzbildung) organische oder anorganische Säuren wie Ameisensäure, Essigsäure,Propionsäure, Glykolsäure, Salpetersäure, Phosphorsäure, Schwefelsäure, Chlorwasserstoffsäure oder Bromwasserstoffsäure.

Bezogen auf das Copolymerisat A sind die erfindungsgemäß mitzuverwendenden Dispergiermittel B in den erfindungsgemäß zu verwendenden wäßrigen Polymerisatdispersionen in der Regel in einer Menge von 0,2 bis 15 Gew.-%, vorzugsweise 0,5 bis 8 Gew.-% und insbesondere 0,8 bis 4 Gew.-% enthalten.

Als nichtionische Co-Dispergiermittel kommen z.B. in Betracht ethoxylierte Mono-, Di- und Trialkylphenole (EO-Grad: 3 bis 100, Alkylrest: $C_4$ bis $C_{12}$), ethoxylierte Fettalkohole und Oxoalkohole (EO-Grad: 3 bis 100, Alkylrest: $C_8$ bis $C_{18}$) oder Sulfobernsteinsäureester.

Ferner kommen in Betracht Ethylenoxid/Propylenoxid-Blockpolymerisate, Alkylglykoside, Fettsäure- und Fettsäureamidethoxylate, wasserlösliche Stärken, Hydroxyethylcellulose, Polyvinylalkohole mit unterschiedlichen Hydrolysegraden und Molekulargewichten sowie Polyvinylpyrrolidon.

Als kationische Co-Dispergiermittel kommen in Betracht Tetraalkylammonium-Salze, N,N-Dialkylimidazoline, N-Alkylpyridiniumsalze etc., wie sie z.B. in Ullmanns Encyklopädie der technischen Chemie, Bd. 22, Verlag Chemie, Weinheim (1982) S. 496 ff oder in der US-A 50 45 576 beschrieben sind.

Als feinteilige, eine negative Oberflächenladung aufweisende Materialien kommen sowohl natürliche als auch synthetische Materialien in Betracht. Sie können sowohl faserförmig als auch von körniger Struktur sein. Beispielhaft genannt seien feinteilige mineralische Materialien wie Mineralfasern (z.B. Steinwolle, Basaltwolle, Schlackenwolle und Glasfasern mit Faserlängen von meist 0,2 bis 5 cm, insbesondere 0,5 bis 2,5 cm und Dicken von etwa 1,7 bis 3,3 dtex; tex ist die Einheit für die längenbezogene Masse von Fasern; es gilt: 1 tex = 1 g/km = 1 mg/m = 10 dtex) und organische Fasern wie Holzfasern (dazu zählen in erster Linie zerkleinertes und aufgeschlossenes Holz wie Kiefernholz; üblicherweise werden solche Holzfasern aus Holzspänen, Holzschnitzeln oder Sägespänen hergestellt (z.B. Ullmann's Encyklopädie der technischen Chemie, 4. Auflage, Bd. 12, S. 720 ff)), Cellulose-fasern, Kokos- und Bananefasern, Fasern aus Papier, Flachs, Sisal, Jute, Stroh, Kork, etc.. Diese Fasern haben üblicherweise eine Länge von 0,3 bis 1,5 cm und eine Dicke von 10 bis 30 dtex. Als nichtfaserige feinteilige Ausgangsmaterialien eignen sich z.B. feuergetrocknete Sande, feinteilige Tone, Blähtone, Montmorilonit, Kaolin, Perlit, Feldspat, Kreide, Kieselgur oder Glimmer. Jedes der vorgenannten feinteiligen, eine negative Oberflächenladung aufweisenden Materialien kann für sich zur Herstellung erfindungsgemäßer Formkörper angewendet werden. Selbstverständlich können aber auch Gemische dieser feinteiligen Materialien angewendet werden. Besonders häufig werden Mischungen aus Fasern und körnigen Materialien angewendet. Bezogen auf die eingesetzten Fasern beträgt der Anteil an körnigem Material dabei in der Regel 20 bis 80, vorzugsweise 30 bis 60 Gew.-%.

Auch können die erfindungsgemäßen Formkörper übliche Brandschutzmittel wie beispielsweise Aluminiumsilikate und -hydroxide, Borate wie Natriumtetraborat und/oder Phosphate wie prim. Natriumphosphat enthalten. Schließlich kann es in manchen Fällen von Vorteil sein, bezogen auf die Menge an feinteiligem, eine negative Oberflächenladung aufweisendem, Ausgangsmaterial noch bis zu 5 Gew.-% an Hydrophobierungsmitteln wie Silikone (Polysiloxane) und Wachse zuzufügen.

Die Herstellung der erfindungsgemäßen Formkörper kann in unterschiedlicher Art und Weise erfolgen. Vorzugsweise wird man aus den eine negative Oberflächenladung aufweisenden feinteiligen Ausgangsmaterialien eine wäßrige Suspension erzeugen, der die erfindungsgemäß zu verwendende wäßrige Polymerisatdispersion zugesetzt wird. Durch Zusatz von einfachen basischen Mitteln wie z.B. Boraten (z.B. Natriumtetraborat = Borax), Carbonaten, Hydrogencarbonaten, Alkalihydroxiden oder Erdalkalihydroxiden (z.B. Calciumhydroxid) wird anschließend der pH-Wert des wäßrigen Mediums erhöht, wodurch sich das polymere Bindemittel auf den feinteiligen Ausgangsmaterialien niederschlägt (das erfindungsgemäße aminische Dispergiermittel wird desaktiviert). Alternativ kann der Niederschlag auch durch Zusatz von mehrwertige Anionen aufweisenden Salzen wie Aluminiumsulfat bewirkt werden. Überraschenderweise weisen auch solche Formkörper eine erhöhte Wasserfestigkeit auf. Das dabei entstehende Gemisch wird in eine Form gegeben und entwässert, was z.B. durch Absaugen und/oder Pressen und/oder Sieben geschehen kann. Der noch nasse Formkörper wird üblicherweise im Verlauf von 0,1 bis 10 h bei Temperaturen von normalerweise 100 bis 250°C getrocknet. Als Trocknungsmittel können dabei Trockenschränke, Umlufttrockner, Infrarot-Strahler, Mikrowellenstrahler und/oder beheizbare Pressen verwendet werden. Beim Entwässern werden besonders klare Wasser dann erhalten, wenn vor der Entwässerung geringe Mengen handelsüblicher Flockungsmittel zugesetzt werden.

Erfindungsgemäß werden flächige Formkörper, insbesondere rechtekkige, bevorzugt. Mit Vorteil beträgt das Verhältnis von Länge oder Breite zur Dicke solcher flächiger, rechteckiger Formkörper 10:1 bis 100:1. Vorzugsweise betragen Länge und Breite 30 bis 70 cm. Die Dicke liegt in der Regel im Bereich von 1 bis 200 mm, wobei der Dickenbereich von 10 bis 20 mm besonders bevorzugt ist. Solche flächigen Formkörper finden beispielsweise als Deckenplatten, Platten zur Schalldämmung oder als Platten zur Wärmeisolierung Verwendung. Selbstverständlich können sie mit den entsprechend Schall-absorbierenden Strukturen versehen werden.

In entsprechender Weise können mit geeigneten Preßformen auch flächige Formkörper mit unregelmäßiger Kontur hergestellt werden. Deren Dicke liegt in der Regel zwischen 0,5 und 10 mm, besonders bevorzugt bei 1 bis 5 mm. Die Oberfläche beträgt in typischer Weise 200 bis 20 000 $cm^2$.

Die erfindungsgemäß zu verwendenden wäßrigen Polymerisatdispersionen sind in an sich bekannter Weise durch radikalische wäßrige Emulsionspolymerisation erhältlich. Zulaufverfahren, in denen der Initiator und/oder die gegebenenfalls in Wasser emulgierten Monomeren während der Polymerisation portionsweise oder kontinuierlich zugegeben werden, können angewendet werden (siehe beispielsweise Encyclopedia of Polymer Science und Engineering, Vol. 6 (1986) 1 bis 52). In der Regel wird man einen Teil des Polymerisationsansatzes ins Polymerisationsgefäß vorlegen, auf die Polymerisationstemperatur erwärmen und den Rest des Polymerisationsansatzes unter Aufrechterhalten der Polymerisationstemperatur dem Polymerisationsgefäß zuführen. Vorzugsweise werden im Rahmen des Zulaufverfahrens Monomere und Initiatoren über räumlich getrennte Zuläufe zugeführt. Selbstverständlich können das Molekulargewicht regelnde Substanzen wie Mercaptane und Thioglykolate mitverwendet werden. Als radikalische Polymerisationsinitiatoren kommen sowohl Azoverbindungen als auch neutrale Peroxide wie H202 oder tert.-Butylhydroperoxid in Betracht. Anionische radikalische Starter wie Natriumperoxodisulfat sollten nicht angewendet werden, da sie Koagulatbildung in der erfindungsgemäßen kationisch stabilisierten wäßrigen Polymerisatdispersionen bewirken können. Mit besonderem Vorteil wird als radikalischer Starter 2,2'-Azo-bis-(2-amidinopropanhydrochlorid) angewendet. Diese Verbindung ist z.B. von der Fa. Wako Chemicals GmbH als V 50 käuflich zu erwerben.

Es handelt sich hierbei um eine Verbindung der Struktur

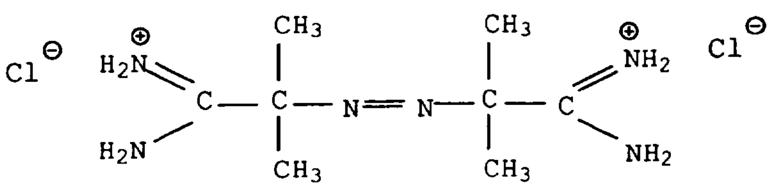 .

Bei Verwendung dieses radikalischen Starters werden Copolymerisate A erhalten, die Gruppen der Struktur

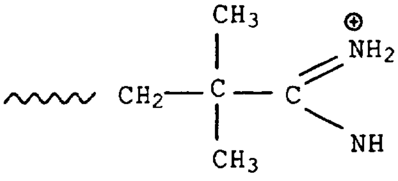

aufweisen, was sich erfindungsgemäß als Vorteil erweist. Ganz generell erfolgt die radikalische wäßrige Emulsionspolymerisation zur Herstellung der erfindungsgemäßen wäßrigen Polymerisatdispersion bei pH-Werten des wäßrigen

Dispergiermediums ≤ 7. Üblicherweise wird unter Inertgasatmosphäre polymerisiert. Peroxidische radikalische Polymerisationsinitiatoren können durch Zusatz organischer Reduktionsmittel wie z.B. Ascorbinsäure und/oder mehrwertiger Übergangsmetallionen wie $Fe^{2+}$ in an sich bekannter Weise aktiviert werden. Bezogen auf die Menge an zu polymerisierenden Monomeren beträgt die Menge an radikalischem Starter in der Regel 0,1 bis 3 Gew.-%. Durch in an sich bekannter Weise durchgeführte physikalische und/oder chemische Desodorierung können aus den erfindungsgemäßen wäßrigen Polymerisatdispersionen Restmonomere entfernt werden.

Beispiele

A) Herstellung erfindungsgemäß zu verwendender wäßriger Polymerisatdispersionen Di sowie einer Vergleichsdispersion VD

D1: In einem einen Volumeninhalt von 3,5 l aufweisenden Polymerisationsgefäß werden 806 g Wasser vorgelegt und auf 80°C erwärmt. Danach wurde das Polymerisationsgefäß mit Stickstoff gespült. Dann wurden 10 Gew.-% der Gesamtmenge eines Zulauf 1 sowie 10 Gew.-% der Gesamtmenge eines Zulauf 2 auf einmal ins Polymerisationsgefäß gegeben und das Gemisch während 15 min bei 80°C anpolymerisiert. Anschließend wurden dem Polymerisationsgefäß unter Aufrechterhaltung der 80°C innerhalb von 3 h die Restmenge an Zulauf 1, und, zeitgleich beginnend, innerhalb von 3,5 h die Restmenge an Zulauf 2 räumlich getrennt kontinuierlich zugeführt. Nach Beendigung von Zulauf 2 wird noch 1 h unter Aufrechterhaltung der 80°C nachpolymerisiert. Es wurde eine wäßrige Polymerisatdispersion erhalten, die einen Feststoffgehalt von 40,1 Gew.-% und deren wäßriges Dispergiermedium einen pH-Wert von 3,4 aufwies.

| | | |
|---|---|---|
| Zulauf 1: | 833 g | Wasser, |
| | 863 g | Styrol, |
| | 288 g | Methylacrylat und |
| | 15 g | einer Mischung aus den Formiaten von unverzweigten $C_{12}$- bis $C_{15}$-Alkylmonoaminen; |
| Zulauf 2: | 11,5 g | 2,2'-Azo-bis-(2-amidinopropanhydrochlorid) = Azo V 50 und |
| | 100 g | Wasser. |

VD: Wie D1, die 863 g Styrol in Zulauf 1 wurden jedoch durch 863 g Methylmethacrylat ersetzt (Styrol und Methylmethacrylat weisen im wesentlichen identische Molekulargewichte auf und tragen gemäß Ullmann's Encyclopädia of Industrial Chemistry, VCH Weinheim (1992), S. 169 in im wesentlichen gleicher Weise zur Glasübergangstemperatur des Copolymerisats A bei). Es wurde eine wäßrige Polymerisatdispersion erhalten, die einen Feststoffgehalt von 40,3 Gew.-% und deren wäßriges Dispergiermedium einen pH-Wert von 3,5 aufwies.

D2: Wie D1, die Vorlage umfaßte jedoch lediglich 263 g Wasser und die Zuläufe wiesen die nachfolgenden Zusammensetzungen auf:

| | | |
|---|---|---|
| Zulauf 1: | 766 g | Wasser, |
| | 7 g | 20 gew.-%ige Schwefelsäure, |
| | 65 g | einer 40 gew.-%igen wäßrigen Lösung von ethoxyliertem Oleylmonoamin (EO-Grad: 12), |
| | 650 g | Styrol, |
| | 390 g | Methylmethacrylat und |
| | 260 g | n-Butylacrylat; |
| Zulauf 2: | 100 g | Wasser und |
| | 3 g | Azo V50. |

Es wurde eine wäßrige Polymerisatdispersion erhalten, die einen Feststoffgehalt von 45,4 Gew.-% und deren wäßriges Dispergiermedium einen pH-Wert von 2,7 aufwies.

D3: Wie D1, die Vorlage umfaßte jedoch 652 g Wasser und die Zuläufe wiesen die nachfolgenden Zusammensetzungen auf:

| | | |
|---|---|---|
| Zulauf 1: | 766 g | Wasser, |
| | 34 g | einer 20 gew.-%igen wäßrigen Lösung des Acetats von ethoxyliertem Oleylmonoamin (EO-Grad: 12), |
| | 420 g | Styrol und |
| | 180 g | Methylmethacrylat; |
| Zulauf 2: | 67 g | Wasser und |
| | 2 g | Azo V50. |

Es wurde eine wäßrige Polymerisatdispersion erhalten, die einen Feststoffgehalt von 49,9 Gew.-% und deren wäßriges Dispergiermedium einen pH-Wert von 3,6 aufwies.

D4: Wie D1, die Vorlage enthielt jedoch

| | |
|---|---|
| 1579 g | Wasser, |
| 14 mg | $FeSO_4$ x $7H_2O$ und |
| 86 g | einer 20 gew.-%igen wäßrigen Lösung des Acetates von ethoxyliertem Oleylmonoamin (EO-Grad: 12). |

Außerdem bestanden die Zuläufe aus:

| | | |
|---|---|---|
| Zulauf 1: | 932 g | Styrol und |
| | 230 g | n-Butylacrylat; |
| Zulauf 2: | 60 g | Wasser und |
| | 38 g | einer 30 gew.%igen wäßrigen Wasserstoffperoxidlösung. |

Ferner betrug die Polymerisationstemperatur 90°C.

Es wurde eine wäßrige Polymerisatdispersion erhalten, die einen Feststoffgehalt von 40,2 Gew.-% und deren wäßriges Dispergiermedium einen pH-Wert von 2,9 aufwies.

D5: Wie D1, die Vorlage enthielt jedoch 670 g Wasser und die Zuläufe wiesen nachfolgende Zusammensetzungen auf:

| | | |
|---|---|---|
| Zulauf 1: | 788 g | Wasser, |
| | 4 g | 75 gew.-%ige Phosphorsäure, |
| | 49 g | einer 40 gew.-%igen wäßrigen Lösung von ethoxyliertem Oleylmonoamin (EO-Grad: 12), |
| | 910 g | Styrol, |
| | 230 g | Methylmethacrylat und |
| | 130 g | n-Butylacrylat; |
| Zulauf 2: | 100 g | Wasser und |
| | 3 g | Azo V50. |

Es wurde eine wäßrige Polymerisatdispersion erhalten, die einen Feststoffgehalt von 45,3 Gew.-% und deren wäßriges Dispergiermedium einen pH-Wert von 3,0 aufwies.

D6: Wie D1, die Vorlage umfaßte jedoch 241 g Wasser und die Zuläufe wiesen die nachfolgende Zusammensetzungen auf:

| | | |
|---|---|---|
| Zulauf 1: | 107 g | Wasser, |
| | 165 g | einer 10 gew.-%igen wäßrigen Lösung des Acetates von Oleylmonoamin, |
| | 220 g | Styrol, |
| | 220 g | Methylmethacrylat und |

(fortgesetzt)

| | | |
|---|---|---|
| | 110 g | n-Butylacrylat; |
| Zulauf 2: | 33 g | 10 gew.-%ige wäßrige Lösung an tert.-Butylhydroperoxid; |
| Zulauf 3: | 42 g | 5 gew.-%ige Lösung an Ascorbinsäure. |

Zulauf 3 wurde synchron zu Zulauf 2 ins Polymerisationsgefäß zugeführt.

Ferner betrug die Polymerisationstemperatur 60°C.

Es wurde eine wäßrige Polymerisatdispersion erhalten, die einen Feststoffgehalt von 50,7 Gew.-% und deren wäßriges Dispergiermedium einen pH-Wert von 4,2 aufwies.

B) Verwendung der wäßrigen Polymerisatdispersionen aus A) als Bindemittel für Mineralfaserplatten

In ein Gemisch aus

| | |
|---|---|
| 7200 g | Wasser, |
| 250 g | Mineralwolle und |
| 89 g | Kaolin |

wurde die jeweilige wäßrige Polymerisatdispersion aus A), jeweils auf einen Feststoffgehalt von 40 Gew.-% verdünnt, eingerührt (in einer Menge von 7 Gew.-% dispergiertem Polymerisat, bezogen auf das Gewicht der zu bindenden Fasern). Anschließend wurde das dispergierte Polymerisat durch Zugabe von 50 ml einer 2 gew.-%igen wäßrigen Boraxlösung (Natriumtetraborat) auf den Mineralfasern niedergeschlagen. Der erhaltene Faserbrei wurde danach in einem Siebkasten (25 cm x 25 cm) unter Zuhilfenahme eines Stempels mit einem Druck von 3 bar abgepreßt, wobei eine Rohplatte von ca. 2 cm Dicke mit einer Restfeuchtigkeit von etwa 50 Gew.-% erhalten wurde. Diese Rohplatte wurde 6 h in einem Umlufttrockenschrank bei 160°C getrocknet.

In entsprechender Weise wurden auch 60 cm x 60 cm x 2 cm Rohplatten hergestellt.

Die so erhaltenen Mineralfaserplatten wurden wie folgt geprüft:

1. Dichtebestimmung:

Aus den erhaltenen 25 cm x 25 cm x 2 cm Mineralfaserplatten wurden Prüflinge von 25 cm Länge x 5 cm Breite x 1,5 cm Dicke geschliffen. Aus dem Gewicht dieser Prüfkörper wurde ihre Massendichte in g/cm$^3$ berechnet (Mittelwert aus zwei Bestimmungen). Die erhaltenen Massendichten zeigt die Tabelle 1.

2. Wasseraufnahme:

Die Prüfkörper aus der Dichtebestimmung wurden bei Raumtemperatur 2 h unter Wasser gelagert. Die Gewichtszunahme wurde nach sorgfältigem Trockentupfen der Außenfläche durch Wägen bestimmt. Die erhaltenen Ergebnisse (Mittelwert aus zwei Bestimmungen, Angabe in Gew.-% bezogen auf das Ausgangsgewicht) zeigt die Tabelle 1.

3. Formbeständigkeit:

Aus den 60 cm x 60 cm x 2 cm Platten wurden mit einem Schleifgerät 60 cm x 60 cm Probekörper einer Dicke von 1,5 cm geschliffen. Diese Prüfkörper wurden in einem Klima von 38°C und 95 % relativer Luftfeuchtigkeit flachseitig an den Kanten an zwei gegenüberliegenden Seiten waagrecht aufgelegt. Nach 200 h wurde die Durchbiegung der Platten (Absenkung der geometrischen Mittelpunktes relativ zu seiner Ausgangsposition) unter ihrem Eigengewicht bestimmt. Die ermittelten Werte zeigt die Tabelle 1.

Tabelle 1

| Bindemittel | Tg[°C] des Polymeren | Dichte [g/cm$^3$] | Wasseraufnahme [Gew.-%] | Durchbiegung [mm] |
|---|---|---|---|---|
| D1 | 82 | 0,29 | 10,7 | 0,24 |
| VD | 80 | 0,30 | 32,2 | 0,62 |
| D2 | 68 | 0,31 | 16,7 | 0,43 |

Tabelle 1 (fortgesetzt)

| Bindemittel | Tg[°C] des Polymeren | Dichte [g/cm$^3$] | Wasseraufnahme [Gew.-%] | Durchbiegung [mm] |
|---|---|---|---|---|
| D3 | 100 | 0,32 | 6,7 | 0,20 |
| D4 | 69 | 0,31 | 5,3 | 0,36 |
| D5 | 88 | 0,30 | 14,3 | 0,29 |
| D6 | 66 | 0,28 | 8,0 | 0,41 |

C) Verwendung der wäßrigen Polymerisatdispersionen aus A) als Bindemittel für Holzfaserplatten

In 4000 ml Wasser wurden unter Rühren Holzfasern mit einem Trockengewicht von 120 g aufgeschlagen. Zu dem dabei anfallenden Faserbrei wurde die jeweilige wäßrige Polymerisatdispersion aus A), jeweils auf einem Feststoffgehalt von 40 Gew.-% verdünnt, eingerührt (in einer Menge von 7,2 g trocken gerechnet). Anschließend wurden unter Rühren 37,8 g einer 5 gew.-%igen wäßrigen Alaun-Lösung (Aluminiumsulfatlösung) zugesetzt und danach durch Zugabe von 2800 ml Wasser verdünnt. Zur Blattbildung wurde der Faserbrei in einen Siebkasten (25 cm x 25 cm) gegossen und durch Pressen mit einem Stempel unter einem Druck von 4 bar bis zu einer Restfeuchte von ca. 70 Gew.-% entwässert. Diese Rohplatten wurden 15 min bei 180°C unter einem Druck von 20 bar verpreßt (Dicke = 3 mm).

Die so erhaltenen Holzfaserplatten wurden wie folgt geprüft:

1. Dichtebestimmung:

Aus den Holzfaserplatten wurden runde Prüfkörper mit einem Durchmesser von 9 cm mittels Stanzeisen ausgestanzt. Aus dem Gewicht dieser Prüfkörper wurde ihre Massendichte in g/cm$^3$ berechnet (Mittelwert aus zwei Bestimmungen). Die erhaltenen Massendichten zeigt die Tabelle 2.

2. Wasseraufnahme:

Die Prüfkörper der Dichtebestimmung wurden 24 h bei Raumtemperatur unter Wasser gelagert. Die Gewichtszunahme wurde nach sorgfältigem Trockentupfen der Außenfläche durch Wägen bestimmt. Die erhaltenen Ergebnisse (Mittelwert aus zwei Bestimmungen, Angabe in Gew.-% bezogen auf das Ausgangsgewicht) zeigt die Tabelle 2.

3. Steifigkeit:

Als Maß für die Steifigkeit der Holzfaserplatten wurde ihr Elastizitätsmodul (ein Maß für die zum Verbiegen der Platten aufzuwendende Arbeit) im 3-Punkt-Biegeversuch nach ISO 178-1992 bestimmt. Die erhaltenen Ergebnisse zeigt die Tabelle 2 in MPa (Mittelwert aus 8 Einzelmessungen).

Tabelle 2

| Bindemittel | Dichte [g/cm$^3$] | Wasseraufnahme [Gew.-%] | E-Modul (MPa) |
|---|---|---|---|
| D1 | 0,83 | 47,1 | 3010 |
| VD | 0,88 | 83,0 | 2500 |
| D2 | 0,84 | 48,4 | 2720 |
| D3 | 0,85 | 59,8 | 2230 |
| D4 | 0,85 | 49,1 | 2940 |
| D5 | 0,80 | 53,0 | 2970 |
| D6 | 0,83 | 54,8 | 2490 |

D) Elektrokinetische Untersuchung der wäßrigen Polymerisatdispersionen D1 und VD aus A) bei 25°C

Wie die Tabellen 1 und 2 ausweisen, ist das Bindemittel VD den erfindungsgemäßen Bindemitteln, insbesondere dem Bindemittel D1, qualitativ unterlegen. Um einen Zugang zum Verständnis für diesen Unterschied zu gewinnen, wurde mit Hilfe der Mikroelektrophorese (Gerät: PenKem 3000 der Fa. Penkem) die elektrophoretische Mobilität der dispergierten Polymerisatpartikel bestimmt. Dazu wurden 0,32 g Dispersion mit 1 1 10 mM wäßriger KCl Lösung verdünnt. Durch Zusatz von $H_3PO_4$ wurde der pH-Wert vor Beginn der Messungen auf einen Wert von 3 eingestellt. Als Ergebnis wurden folgende Mobilitäten u erhalten:

VD: u = 2,8 (µm/s)/(V/cm);

D1: u = 5,5 (µm/s)/(V/cm).

In überraschender Weise zeigen die erfindungsgemäßen Styrol-(Meth)acrylat-Copolymerisatteilchen signifikant erhöhte elektrophoretische Mobilitäten, d.h. signifikant höheren kationischen Charakter. Dies bedingt vermutlich eine erhöhte Affinität zur negativen Oberflächenladung des feinteiligen Ausgangsmaterials und infolgedessen ein besonders gleichmäßiges Abscheiden auf selbigem, was wahrscheinlich die Qualitätsverbesserung der Formkörper bedingt.

## Patentansprüche

1. Methode der Verwendung von kationisch stabilisierten wäßrigen Polymerisatdispersionen, enthaltend

   - ein in disperser Verteilung befindliches Copolymerisat A, das in polymerisierter Form aus

| | |
|---|---|
| 30 bis 80 | Gew.-Teilen Styrol (Monomer a), |
| 20 bis 70 | Gew.-Teilen wenigstens eines Monomeren aus der Gruppe umfassend Ester der Acryl- und Methacrylsäure mit $C_1$- bis $C_8$-Alkanolen (Monomere b) und |
| 0 bis 10 | Gew.-Teilen sonstiger radikalisch copolymerisierbarer Monomerer (Monomere c) |

   mit der Maßgabe aufgebaut ist, daß die statische Glasübergangstemperatur Tg des Copolymerisats A 40 bis 110°C beträgt, sowie

   - als Dispergiermittel B ein Gemisch bestehend aus wenigstens einem wenigstens acht C-Atome aufweisenden primären, sekundären und/oder tertiären organischen Monoamin und dessen Säureadditionssalz,

   als Bindemittel für Formkörper auf der Basis von eine negative Oberflächenladung aufweisenden feinteiligen Materialien.

2. Methode der Verwendung nach Anspruch 1, wobei die statische Glasübergangstemperatur Tg des Copolymerisats A 60 bis 110°C beträgt.

3. Methode der Verwendung nach Anspruch 1, wobei die statische Glasübergangstemperatur Tg des Copolymerisats A 80 bis 100°C beträgt.

4. Methode der Verwendung nach Anspruch 1,, wobei das Copolymerisat A, bezogen auf seine Masse, 40 bis 80 Gew.-% Styrol einpolymerisiert enthält.

5. Methode der Verwendung nach Anspruch 1, wobei die kationisch stabilisierte wäßrige Polymerisatdispersion als Bestandteil des Dispergiermittels B wenigstens eine Verbindung der allgemeinen Formel I

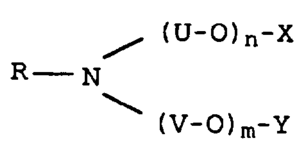

(I),

   in der

   R für $C_8$- bis $C_{18}$-Alkyl oder $C_8$- bis $C_{18}$-Alkenyl,
   U,V für $C_2$- bis $C_4$-Alkylen,
   X,Y für Wasserstoff, $C_1$- bis $C_{18}$-Alkyl oder $C_2$- bis $C_{18}$-Alkenyl und

n,m für ganze Zahlen von 0 bis 15 stehen,

enthält.

**6.** Methode der Verwendung nach Anspruch 1, wobei als eine negative Oberflächenladung aufweisende feinteilige Materialien Mineralfasern, Perlite und/oder Holzfasern verwendet werden.

**7.** Methode der Verwendung nach Anspruch 1, wobei das Copolymerisat A Gruppen der Struktur

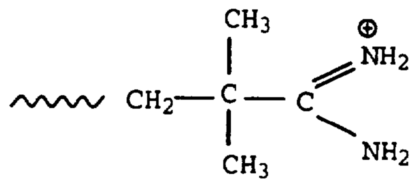

aufweist.

**8.** Wäßrige, kationisch stabilisierte, Polymerisatdispersion, enthaltend

- ein in disperser Verteilung befindliches Copolymerisat A, das in polymerisierter Form aus

| | |
|---|---|
| 30 bis 80 | Gew.-Teilen Styrol (Monomer a), |
| 20 bis 70 | Gew.-Teilen wenigstens eines Monomeren aus der Gruppe umfassend Ester der Acryl- und Methacrylsäure mit $C_1$- bis $C_8$-Alkanolen (Monomere b) und |
| 0 bis 10 | Gew.-Teilen sonstiger radikalisch copolymerisierbarer Monomerer (Monomere c) |

  mit der Maßgabe aufgebaut ist, daß die statische Glasübergangstemperatur Tg des Copolymerisats A 40 bis 110°C beträgt, sowie

- als Dispergiermittel B ein Gemisch bestehend aus wenigstens einem wenigstens acht C-Atome aufweisenden primären, sekundären und/oder tertiären organischen Monoamin und dessen Säureadditionssalz.

**9.** Wäßrige Polymerisatdispersion nach Anspruch 8, wobei die statische Glasübergangstemperatur Tg des Copolymerisats A 60 bis 110°C beträgt.

**10.** Wäßrige Polymerisatdispersion nach Anspruch 8, wobei die statische Glasübergangstemperatur Tg des Copolymerisats A 80 bis 100°C aufweist.

**11.** Wäßrige Polymerisatdispersion nach Anspruch 8, wobei das Copolymerisat A, bezogen auf seine Masse, 40 bis 80 Gew.-% Styrol einpolymerisiert enthält.

**12.** Wäßrige Polymerisatdispersion nach Anspruch 8,, die als Bestandteil des Dispergiermittels B wenigstens eine Verbindung der allgemeinen Formel I

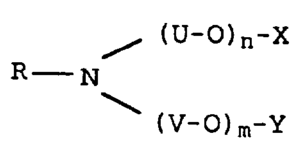 (I),

in der

R für $C_8$- bis $C_{18}$-Alkyl oder $C_8$- bis $C_{18}$-Alkenyl,
U,V für $C_2$- bis $C_4$-Alkylen,
X,Y für Wasserstoff, $C_1$- bis $C_{18}$-Alkyl oder $C_2$- bis $C_{18}$-Alkenyl und

n,m für ganze Zahlen von 0 bis 15 stehen,

enthält.

**13.** Wäßrige Polymerisatdispersion nach Anspruch 8, deren Copolymerisat A Gruppen der Struktur

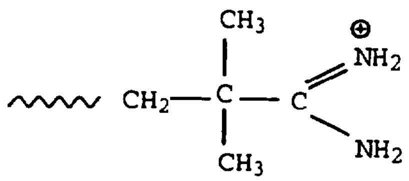

aufweist.

**14.** Formkörper auf der Basis von eine negative Oberflächenladung aufweisenden feinteiligen Materialien und einem polymeren Bindemittel, die enthalten

- als polymere Bindemittel ein Copolymerisat A, das in polymerisierter Form aus

| | |
|---|---|
| 30 bis 80 | Gew.-Teilen Styrol (Monomer a), |
| 20 bis 70 | Gew.-Teilen wenigstens eines Monomeren aus der Gruppe umfassend Ester der Acryl- und Methacrylsäure mit $C_1$- bis $C_8$-Alkanolen (Monomere b) und |
| 0 bis 10 | Gew.-Teilen sonstiger radikalisch copolymerisierbarer Monomerer (Monomere c) |

  mit der Maßgabe aufgebaut ist, daß die statische Glasübergangstemperatur Tg des Copolymerisats A 40 bis 110°C beträgt, sowie

- ein Gemisch bestehend aus wenigstens einem wenigstens acht C-Atome aufweisenden primären, sekundären und/oder tertiären organischen Monoamin und dessen Säureadditionssalz.

**15.** Formkörper nach Anspruch 14, die, bezogen auf ihr Gesamtgewicht, 1 bis 25 Gew.-% an Copolymerisat A enthalten.

**16.** Flächiger rechteckiger Formkörper nach Anspruch 14, dessen Länge und Breite 30 bis 70 cm betragen und dessen Dicke 1 bis 20 mm beträgt.

**17.** Verfahren zur Herstellung von Formkörpern gemäß Anspruch 14, dadurch gekennzeichnet, daß man

- aus eine negative Oberflächenladung aufweisendem feinteiligem Ausgangsmaterial eine wäßrige Suspension erzeugt,

- der wäßrigen Suspension eine wäßrige kationisch stabilisierte Polymerisatdispersion zusetzt, die enthält

  i) ein in disperser Verteilung befindliches Copolymerisat A, das in polymerisierter Form aus

| | |
|---|---|
| 30 bis 80 | Gew.-Teilen Styrol (Monomer a), |
| 20 bis 70 | Gew.-Teilen wenigstens eines Monomeren aus der Gruppe umfassend Ester der Acryl- und Methacrylsäure mit $C_1$- bis $C_8$-Alkanolen (Monomere b) und |
| 0 bis 10 | Gew.-Teilen sonstiger radikalisch copolymerisierbarer Monomere (Monomere c) |

  mit der Maßgabe aufgebaut ist, daß die statische Glasübergangstemperatur Tg des Copolymerisats A 40 bis 110°C beträgt, sowie
  ii) als Dispergiermittel B ein Gemisch bestehend aus wenigstens einem wenigstens acht C-Atome aufweisenden primären, sekundären und/oder tertiären organischen Monoamin und dessen Säureadditionssalz,

- durch Zusatz von basischen Mitteln oder mehrwertige Anionen aufweisenden Salzen das Copolymerisat A auf den feinteiligen Ausgangsmaterialien niederschlägt,
- das dabei entstehende Gemisch in eine Form gibt, entwässert und anschließend trocknet.

**18.** Formkörper, erhältlich nach einem Verfahren gemäß Anspruch 17.

**Claims**

**1.** A method of using cationically stabilized aqueous polymer emulsions, containing

- a dispersed copolymer A which, in polymerized form, is composed of

| | |
|---|---|
| from 30 to 80 | parts by weight of styrene (monomer a), |
| from 20 to 70 | parts by weight of at least one monomer selected from the group consisting of esters of acrylic and methacrylic acid with $C_1$-$C_8$-alkanols (monomers b) and |
| from 0 to 10 | parts by weight of other monomers capable of free radical copolymerization (monomers c), |

with the proviso that the static glass transition temperature Tg of the copolymer A is from 40 to 110°C, and

- as dispersant B, a mixture consisting of at least one primary, secondary or tertiary organic monoamine of at least eight carbon atoms and an acid addition salt thereof,

as binders for moldings based on finely divided materials having a negative surface charge.

**2.** A method of use as claimed in claim 1, wherein the static glass transition temperature Tg of the copolymer A is from 60 to 110°C.

**3.** A method of use as claimed in claim 1, wherein the static glass transition temperature Tg of the copolymer A is from 80 to 100°C.

**4.** A method of use as claimed in claim 1, wherein the copolymer A contains from 40 to 80 % by weight, based on its mass, of styrene in the form of polymerized units.

**5.** A method of use as claimed in claim 1, wherein the cationically stabilized aqueous polymer emulsion contains, as a component of the dispersant B, at least one compound of the formula I

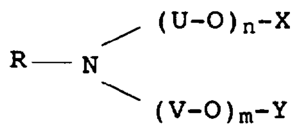

(I),

where

R is $C_8$-$C_{18}$-alkyl or $C_8$-$C_{18}$-alkenyl,
U and V are each $C_2$-$C_4$-alkylene,
X and Y are each hydrogen, $C_1$-$C_{18}$-alkyl or $C_2$-$C_{18}$-alkenyl and
n and m are each an integer from 0 to 15.

**6.** A method of use as claimed in claim 1, wherein mineral fibers, pearlites or wood fibers are used as finely divided materials having a negative surface charge.

**7.** A method of use as claimed in claim 1, wherein the copolymer A contains groups having the structure

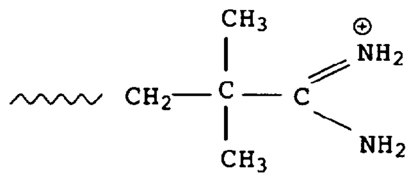
.

**8.** A cationically stabilized aqueous polymer emulsion, containing

- a dispersed copolymer A which, in polymerized form, is composed of

| | |
|---|---|
| from 30 to 80 | parts by weight of styrene (monomer a), |
| from 20 to 70 | parts by weight of at least one monomer selected from the group consisting of esters of acrylic and methacrylic acid with $C_1$-$C_8$-alkanols (monomers b) and |
| from 0 to 10 | parts by weight of other monomers capable of free radical copolymerization (monomers c), |

  with the proviso that the static glass transition temperature Tg of the copolymer A is from 40 to 110°C, and

- as dispersant B, a mixture consisting of at least one primary, secondary or tertiary organic monoamine of at least eight carbon atoms and an acid addition salt thereof.

**9.** An aqueous polymer emulsion as claimed in claim 8, wherein the static glass transition temperature Tg of the copolymer A is from 60 to 110°C.

**10.** An aqueous polymer emulsion as claimed in claim 8, wherein the static glass transition temperature Tg of the copolymer A is from 80 to 100°C.

**11.** An aqueous polymer emulsion as claimed in claim 8, wherein the copolymer A contains from 40 to 80 % by weight, based on its mass, of styrene in the form of polymerized units.

**12.** An aqueous polymer emulsion as claimed in claim 8, which contains, as a component of the dispersant B, at least one compound of the formula I

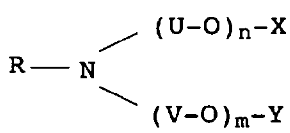
(I),

where

R is $C_8$-$C_{18}$-alkyl or $C_8$-$C_{18}$-alkenyl,
U and V are each $C_2$-$C_4$-alkylene,
X and Y are each hydrogen, $C_1$-$C_{18}$-alkyl or $C_2$-$C_{18}$-alkenyl and
n and m are each an integer from 0 to 15.

**13.** An aqueous polymer emulsion as claimed in claim 8, whose copolymer A contains groups having the structure

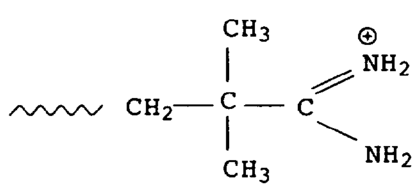
.

**14.** A molding based on a finely divided material having a negative surface charge and a polymeric binder and containing

- as the polymeric binder, a copolymer A which, in polymerized form, is composed of

| | |
|---|---|
| from 30 to 80 | parts by weight of styrene (monomer a), |
| from 20 to 70 | parts by weight of at least one monomer selected from the group consisting of esters of acrylic and methacrylic acid with $C_1$-$C_8$-alkanols (monomers b) and |
| from 0 to 10 | parts by weight of other monomers capable of free radical copolymerization (monomers c), |

  with the proviso that the static glass transition temperature Tg of the copolymer A is from 40 to 110°C, and

- a mixture consisting of at least one primary, secondary or tertiary organic monoamine of at least eight carbon atoms and an acid addition salt thereof.

**15.** A molding as claimed in claim 14, which contains from 1 to 25 % by weight, based on its total weight, of copolymer A.

**16.** A sheet-like rectangular molding as claimed in claim 14, whose length and width are from 30 to 70 cm and whose thickness is from 1 to 20 mm.

**17.** A process for the production of a molding as claimed in claim 14, wherein

- an aqueous suspension is produced from a finely divided starting material having a negative surface charge,

- an aqueous cationically stabilized polymer emulsion which contains

  i) a dispersed copolymer A which, in polymerized form, is composed of

| | |
|---|---|
| from 30 to 80 | parts by weight of styrene (monomer a), |
| from 20 to 70 | parts by weight of at least one monomer selected from the group consisting of esters of acrylic and methacrylic acid with $C_1$-$C_8$-alkanols (monomers b) and |
| from 0 to 10 | parts by weight of other monomers capable of free radical copolymerization (monomers c), |

  with the proviso that the static glass transition temperature Tg of the copolymer A is from 40 to 110°C, and

  ii) as dispersant B, a mixture consisting of at least one primary, secondary or tertiary organic monoamine of at least eight carbon atoms and an acid addition salt thereof
  is added to the aqueous suspension,

- the copolymer A is precipitated onto the finely divided starting material by adding a basic material or a salt having a polyvalent anion and

- the resulting mixture is introduced into a mold, dewatered and then dried.

**18.** A molding obtainable by a process as claimed in claim 17.

**Revendications**

**1.** Procédé d'utilisation de dispersions aqueuses de polymères stabilisées par des cations, contenant

- un copolymère A se trouvant sous forme dispersée, construit sous forme polymérisée à partir de

| | |
|---|---|
| 30 à 80 | parties en poids de styrène (monomère a), |

(suite)

| | |
|---|---|
| 20 à 70 | parties en poids d'au moins un monomère choisi dans le groupe formé par les esters des acides acrylique et méthacrylique avec des alcanols en $C_1$-$C_8$ (monomères b) et |
| 0 à 10 | parties en poids d'autres monomères copolymérisables de façon radicalaire (monomères c) |

étant spécifié que la température de transition vitreuse statique Tg du copolymère A vaut de 40 à 110°C, et

- en tant qu'agent dispersant B, un mélange d'au moins une monoamine organique primaire, secondaire et/ou tertiaire, ayant au moins 8 atomes de carbone, et de son sel d'addition avec un acide,

en tant que liant pour des corps moulés à base de matériaux finement divisés ayant une charge superficielle négative.

**2.** Procédé d'utilisation selon la revendication 1, dans lequel la température de transition vitreuse statique Tg du copolymère A vaut de 60 à 110°C.

**3.** Procédé d'utilisation selon la revendication 1, dans lequel la température de transition vitreuse statique Tg du copolymère A vaut de 80 à 100°C.

**4.** Procédé d'utilisation selon la revendication 1, dans lequel le copolymère A contient en liaison polymère 40 à 80 % en poids de styrène, par rapport à sa masse.

**5.** Procédé d'utilisation selon la revendication 1, dans lequel la dispersion aqueuse de polymères stabilisée par des cations contient, en tant qu'agent dispersant B, au moins un composé de formule générale I

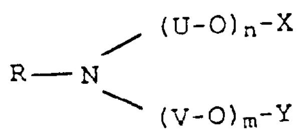

(I),

dans laquelle

R est mis pour un groupement alkyle en $C_8$-$C_{18}$ ou alcényle en $C_8$-$C_{18}$,
U, V sont mis pour un groupement alkylène en $C_2$-$C_4$,
X, Y sont mis pour un atome d'hydrogène, un groupement alkyle en $C_1$-$C_{18}$ ou alcényle en $C_2$-$C_{18}$ et
n, m sont mis pour des nombres entiers de 0 à 15.

**6.** Procédé d'utilisation selon la revendication 1, dans lequel on utilise des fibres minérales, de la perlite et/ou des fibres de bois en tant que matériaux finement divisés ayant un charge surperficielle négative.

**7.** Procédé d'utilisation selon la revendication 1, dans lequel le copolymère A présente des groupements de structure

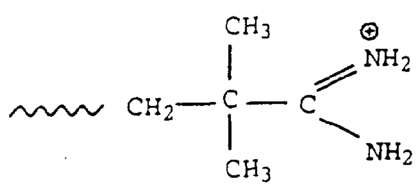

**8.** Dispersions aqueuses de polymères stabilisées par des cations, contenant

- un copolymère A se trouvant sous forme dispersée, construit sous forme polymérisée à partir de

| | |
|---|---|
| 30 à 80 | parties en poids de styrène (monomère a), |
| 20 à 70 | parties en poids d'au moins un monomère choisi dans le groupe formé par les esters des acides acrylique et méthacrylique avec des alcanols en $C_1$-$C_8$ (monomères b) |
| | et |
| 0 à 10 | parties en poids d'autres monomères copolymérisables de façon radicalaire (monomères c) |

étant spécifié que la température de transition vitreuse statique Tg du copolymère A vaut de 40 à 110°C, et

- en tant qu'agent dispersant B, un mélange d'au moins une monoamine organique primaire, secondaire et/ou tertiaire, ayant au moins 8 atomes de carbone, et de son sel d'addition avec un acide.

**9.** Dispersions aqueuses de polymères selon la revendication 8 dans lesquelles la température de transition vitreuse statique Tg du copolymère A vaut de 60 à 110 °C.

**10.** Dispersions aqueuses de polymères selon la revendication 8 dans lesquelles la température de transition vitreuse statique Tg du copolymère A vaut de 80 à 100°C.

**11.** Dispersions aqueuses de polymères selon la revendication 8 dans lesquelles le copolymère A contient en liaison polymère 40 à 80% en poids de styrène, par rapport à sa masse.

**12.** Dispersions aqueuses de polymères selon la revendication 8, contenant en tant qu'agent dispersant B, au moins un composé de formule générale I

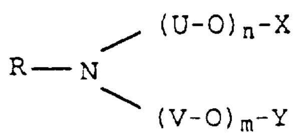

(I),

dans laquelle

R est mis pour un groupement alkyle en $C_8$-$C_{18}$ ou alcényle en $C_8$-$C_{18}$,
U, V sont mis pour un groupement alkylène en $C_2$-$C_4$,
X, Y sont mis pour un atome d'hydrogène, un groupement alkyle en $C_1$-$C_{18}$ ou alcényle en $C_2$-$C_{18}$ et
n, m sont mis pour des nombres entiers de 0 à 15.

**13.** Dispersions aqueuses de polymères selon la revendication 8 dont le copolymère A présente des groupements de structure

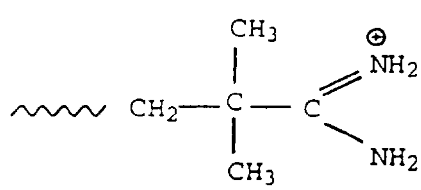

**14.** Corps moulés à base de matériaux finement divisés ayant une charge superficielle négative et d'un liant polymère, qui contiennent

- en tant que liant polymère, un copolymère A construit sous forme polymérisée à partir de

| | |
|---|---|
| 30 à 80 | parties en poids de styrène (monomère a), |

(suite)

| | |
|---|---|
| 20 à 70 | parties en poids d'au moins un monomère choisi dans le groupe formé par les esters des acides acrylique et méthacrylique avec des alcanols en $C_1$-$C_8$ (monomères b)<br>et |
| 0 à 10 | parties en poids d'autres monomères copolymérisables de façon radicalaire (monomères c) |

étant spécifié que la température de transition vitreuse statique Tg du copolymère A vaut de 40 à 110°C, et

- un mélange d'au moins une monoamine organique primaire, secondaire et/ou tertiaire, ayant au moins 8 atomes de carbone, et de son sel d'addition avec un acide.

**15.** Corps moulés selon la revendication 14 qui contiennent 1 à 25% en poids de copolymère A, par rapport à leur poids total.

**16.** Corps moulés plats et rectangulaires selon la revendication 14 dont les longueurs et largeurs valent 30 à 70 cm et dont les épaisseurs valent de 1 à 20 mm.

**17.** Procédé de fabrication de corps moulés selon la revendication 14, caractérisé en ce que

- on prépare une suspension aqueuse à partir d'un matériau de départfinement divisé ayant une charge superficielle négative,

- on ajoute à cette suspension aqueuse une dispersion de polymères stabilisée par des cations, qui contient

  i) un copolymère A se trouvant sous forme dispersée, construit sous forme polymérisée à partir de

| | |
|---|---|
| 30 à 80 | parties en poids de styrène (monomère a), |
| 20 à 70 | parties en poids d'au moins un monomère choisi dans le groupe formé par les esters des acides acrylique et méthacrylique avec des alcanols en $C_1$-$C_8$ (monomères b)<br>et |
| 0 à 10 | parties en poids d'autres monomères copolymérisables de façon radicalaire (monomères c) |

  étant spécifié que la température de transition vitreuse statique Tg du copolymère A vaut de 40 à 110°C, et

  ii) en tant qu'agent dispersant B, un mélange d'au moins une monoamine organique primaire, secondaire et/ou tertiaire, ayant au moins 8 atomes de carbone, et de son sel d'addition avec un acide,

- on fait se déposer le copolymère A sur les matériaux de départ finement divisés, par addition d'agents basiques ou de sels contenant des anions polyvalents,

- on place le mélange résultant dans un moule, on le déshydrate puis on le sèche.

**18.** Corps moulés obtenus par un procédé selon la revendication 17.